# EUROPEAN PATENT SPECIFICATION

(11) **EP 1 507 646 B1**
(45) Date of publication and mention of the grant of the patent: **23.08.2006**
(21) Application number: 03721178.6
(22) Date of filing: 14.05.2003
(51) Int. Cl.: B29C 70/08, B29C 70/46, B32B 5/20, B32B 5/28

(54) **A METHOD OF PRODUCING A THREE-DIMENSIONAL ARTICLE HAVING A SANDWICH STRUCTURE**
VERFAHREN ZUR HERSTELLUNG EINES DREI-DIMENSIONALEN GEGENSTANDES MIT EINER SANDWICHSTRUKTUR
PROCEDE DE PRODUCTION D'UN ARTICLE TRIDIMENSIONNEL COMPRENANT UNE STRUCTURE SANDWICH

(30) Priority: 21.05.2002 NL 1020640
(43) Date of publication of application: 23.02.2005
(73) Proprietor: FITS Holding BV, 3970 AA Driebergen (NL)
(72) Inventor: de Groot, Martin Th., 3972 GM Driebergen (NL)
(86) International application number: PCT/NL2003/000351
(87) International publication number: WO 2003/097334

(56) References cited:
- EP-A- 0 264 495
- EP-A- 0 636 463

## Description

The invention relates to a method of producing a three-dimensional article having a sandwich structure, comprising a deforming step of a mainly flat assembly of a core layer of a thermoplastic foam and at least one cover layer of a fiber reinforced thermoplastic synthetic material into a three-dimensional article.

Such a method is known in the art, for example from EP 0 264 495. This known method comprises laminating at least one cover layer of a fiber reinforced synthetic material, for example a fabric of aramid fibers, which is impregnated with polyetherimid, to a finished foam core like polymethacrylimid. In a preferred method a combination of starting materials is used, of which the synthetic foam has the lowest glass-transition temperature. In order to improve the bonding between a cover layer and the foam core, the face of the foam to be laminated, is provided with shallow grooves, to which a bonding layer from the same synthetic material is applied, serving as the synthetic matrix for the fiber reinforced cover layer. Hereafter the assembly is subjected to a deforming step, e.g. by means of direct or indirect heating in a suitable mould.

In particular, this method can be used for the production of three-dimensional articles for application in the field of aircraft and spacecraft, because of the profitable combination of strength properties and relatively low weight.

However, a disadvantage of this known method is the requirement of relatively high temperatures for the actual deforming step, e.g. in case of a cover layer of fiber reinforced polyetherimid, a preheating temperature higher than 290 °C and mould temperatures of more than 130 °C to about 180 °C, as a result of the selected starting materials. At those high temperatures there is a real chance that the foam will collaps, due to the lower Tg of the foam, which chance is enhanced by the required deforming pressure. The relation between pressure, time and temperature during the deforming step is in this way very critical, especially for articles with a thickness of less than 10 mm. This is even more important, when the glasstransition temperature of the foam is lower. Besides, for some possible applications the bending rigidity of the sandwich panel and therefore of the end-product is insufficient. In order to increase the bending rigidity, the thickness of the foam could be enlarged and/or one or more additional cover layers could be applied. Such solutions results always in an increase in weight, which is often considered as a disadvantage.

The aim of the present invention is to eliminate at least partly the above mentioned disadvantages.

In particular, the objective of the present invention is to provide a method of producing a three-dimensionally shaped article having a sandwich structure, comprising a three-dimensionally deforming step at relatively low temperatures.

Yet a further objective of the invention is to provide such a method wherein the strength properties of the obtained three-dimensional article are improved, in particular the flexural strength and bending rigidity, compared to the articles which are produced according to methods known from the state of the art.

Yet another objective of the invention is to provide such a method wherein the coherence between the applied pressure, time and temperature during the deforming step are less critical to the end-product.

The method of the above mentioned type, is according to the invention characterized by an anisotropic thermoplastic foam in the core, and by the starting materials being selected in such a way that the glass-transition temperature of the starting material of the core layer is higher than the glass transition temperature of the synthetic material in the cover layer.

In the method according to the invention, an anisotropic foam is used, in other words, a closed cell foam with cells of an oblong shape, the length of which is at least some times the maximum width of the cell. Such an anisotropic foam has a high compression strength and modulus in a direction perpendicular to the surface of the mainly flat assembly, in other words in the thickness direction and so of the three-dimensionally shaped end-product. In addition to the high compression strength(modulus), such an an-isotropic foam has a high flexural stiffness, improved impact strength and three-dimensional formability at room temperature. Here it is noted that in the laminating method of producing a sandwich panel mentioned in the discussion of the prior art, the applied finished foam is isotropic with almost bulb-shaped cells. Such an isotropic foam is not three-dimensionally deformable at room temperature.

According to the method of the invention the starting materials are selected in relation to the glass transition temperatures, to ensure that the cover layer starts to flow, while the foam is not collapsing. The chance of collapsing of the foam in the method as described in EP-A-0 264 495, is almost sure, due to the preferred material choice and related deforming temperatures. As the glass transition temperature of the foam is already reached long before the synthetic matrix material of the fiber reinforced cover layers starts to soften. Advantageously the melting point of the synthetic material of the fiber reinforced cover layer is nearby (± 25 °C) the glass transition temperature of the starting material of the foam core layer, preferably the melting point is somewhat lower than the glass transition temperature instead of being somewhat higher.

The assembly of a foam core layer and at least one cover layer, preferably two cover layers, at both sides of the core layer, can be made from an anisotropic foam, upon which the cover layer or layers are placed freely. In order to obtain a mutual bonding, relatively high preheating temperatures (before the actual deforming step) are required. Advantageously this method is used for relatively thick foam layers, i.e. with a thickness of 12 mm or more, like 25 mm.

Advantageously the method comprises a sandwich production step by in-situ forming of a sandwich panel, which panel is subjected to the deforming step as the mainly flat assembly. According to this preferred embodiment the sandwich panel, which is produced as an intermediate for the manufacturing of the three-dimensional article, is formed in one time in-situ. In other words, the foam forming and bonding of one or more cover layers to the formed foam is all executed in one step. The in-situ forming of a panel having a sandwich structure is known as such, e.g. from EP 0 636 463 of the applicant. In general such a method consists of the step of placing a film of thermoplastic material, such as polyetherimid containing an amount of a blowing agent, between two layers of a fiber reinforced thermoplastic synthetic material, such as glass fiber reinforced polyetherimid. Hereafter this assembly is placed between two press plates heated optionally, after which the film is allowed to foam, by applying heat and pressure to the press plates, in general according to a fixed foaming curve, to a predetermined foam thickness. When this foam thickness has been attained, the obtained sandwich panel is cooled in a controlled way, in general according to a certain cooling curve. In this way, the foam is formed and simultaneously a bonding takes place between the formed foam and the cover layers of the fiber reinforced synthetic material, resulting in a very strong bonding of the foam to the cover layers. The structure of the foam of the sandwich panel which is produced by in-situ, is anisotropic, generally consisting of oblong closed cells, of which the length is several times the widest cross section, for example 5 times.

In particular this in-situ foaming method is suited to produce thin sandwich panels having an optimal combination of three-dimensional formability at low temperatures, even at room temperature, high bending rigidity, low weight and small thickness, e.g. less than 12 mm. In addition the deforming conditions, this means the profile of pressure, period of time and temperature is less critical to the quality of the end-product.

The starting material for the foam core layer can be any thermoplastic synthetic material or mixture of materials, which can be foamed using an appropriate blowing agent. Examples include amongst others, polyetherimid (PEI), polyethersulfon (PES) and polysulfon.In particular polyethersulfon and especially polyetherimid are preferred, because of earlier mentioned advantages and also because of the excellent fire resistant properties, which are favourable for applications in the space- and aircraft industry and also in other transport sectors. Examples of appropriate blowing agents for polyetherimid are acetone and methylenechloride. Other blowing agents either as solvent or swelling agent or as physical and/or chemical blowing agent or a combination thereof are known in the art. Mostly the starting material for the foam core layer is a film, which is impregnated with the appropriate amount of blowing agent. If desired the additives, like nanoparticles, fibers and flame retarding agents can be added. The thickness of the film is not limited and varies for example from 75 to 400 micrometer or more. Several stacked films can also be applied.

Examples of the synthetic matrix material for the cover layer include polycarbonate (PC), polymethylmetacrylaat (PMMA) and mixtures of co-polymers, further for example polyethyleneterephtalate with polybutyleneterephtalate (PET/PBT) like Valox (General Electric Company), and a mixture of PC with PEI. Other fire resistant polymers are also applicable. If desired additives, like flame retardaning agents can be added. Preferably polycarbonate (PC) is applied as synthetic matrix for the cover layers, in particular in combination with a PEI foam. Polycarbonate (PC) has a glass transition temperature of about 150 °C and a melting temperature of 220 °C, while polyetherimid (PEI) has a glass transition temperature of 220 °C. This is a preferred material combination because of the excellent strength properties, fire retarding properties, deformability at low temperatures and the relatively low density of the sandwich panel obtained therefrom and therefore of the shaped article. It is noted, that a lower deforming temperature results in a weight benefit, which is especially important in the aircraft- and space industry. Examples of articles, manufactured according to the method of this invention, comprise covering panels, especially ceiling- and/or side-wall panels, in particular for the interior walls of spaceships, airplanes and transport vehicles such as trains, trams and busses, complete tubs for seats, arms and/or backs of seats and seats for seating furniture for means of transport. Load carrying constructions could also be produced according to the method of this invention. Other typical end products which can be made according to the invention include helmets, bath tubs, furniture and certain car parts.

The fiber selection for the fiber reinforced synthetic material is not limited in any way. Inorganic fibers, such as glass, metallic and carbon fibers and organic fibers including aramid fibers, and natural fibers can be applied, if they are resistant to the conditions prevailing during carrying out the method. The fibers may be oriented or not. Knitting, fabrics, cloth and unidirectional fibers are different forms of appearance thereof. Beforehand the fiber structure is in general impregnated with a synthetic material into a so-called prepreg, and advantageously this is consolidated to a cover layer, which is used as starting material for the method according the invention. Other technologies are film-stacking and laminating methods.

Preferably the thickness of the in-situ formed sandwich panel is smaller than 12 mm, or more preferably smaller than 8 mm, because of the favourable relation between bending rigidity and weight. When the thickness is larger, the relative profit in bending rigidity and other properties is lower.

In order to improve the strength properties one or more intermediate layers of a fiber reinforced thermoplastic synthetic material may be present in the foam. In other words, the final product obtained has a sandwich configuration, comprising alternating layers of foam and fiber reinforced thermoplastic material respectively.

Because of the choice of the material for the cover layer, advantageously the deforming step is performed at a mould temperature below 150 C, depending on the materials selection for the mould. Besides a clear advantage with respect to the operational costs of the method of producing, like already argued before, a deforming step at lower temperatures offers the opportunity to obtain an end product having a lower weight.

In this context, it is noted that the deforming step comprises the working of the surface of the sandwich panel, during which at least a part of this surface is given a different shape.

Hereinafter the invention will be further illustrated by means of the following examples.

### Example 1

A sandwich panel, consisting of consolidated, glass fiber reinforced polycarbonate cover layers and an in-situ foamed foam of polyetherimid is manufactured according to the method described hereinafter.

A film of polyetherimid having a thickness of 250 micrometer and such a film having a thickness of 125 micron, which films are known as Ultem 1000 standard grade from General Electric company, impregnated with acetone, are placed between two cover layers with a thickness ± 0,25 mm. Such a cover layer is a consolidated sheet of glass fabric (Interglas Style 91135), impregnated with 32±1% polycarbonate, manufactured by the film stacking method known as such.

This assembly of films and cover layers is placed between two heated press plates, to which a pressure is applied of about 25-50 kg/cm2. After the assembly has reached a uniform temperature, the press is opened according to a foaming curve related to the selected type of film, until the foam thickness, produced from the film, has a value of 5,2 mm. After a controlled cooling, the sandwich panel is dried in order to remove acetone as much as possible.
The in-situ sandwich panel obtained in this way, has an anisotropic foam structure, having mainly oblong cells with the largest dimension in the thickness direction of the panel. At a foam density of 90 kg/m3 the compression strength is 2,3 MPa. For comparison: isotropic PEI foam having a density of 90 kg/m3, has a compression strength of 1,3 MPa.

The sandwich panel of 220x220 mm manufactured as mentioned above, is placed between two heated press plates, maintained at T= 210-240 °C, and heated during 10-20 seconds. To prevent sticking of the soft polycarbonate to the press plates, a 0,5 mm thick blanket of silicon rubber is used as separation film.

The total assembly is placed upon a heated wooden mould (T= 50-70 °C) with a hollow circular hole, after which a flat wooden upper mould (T= 50-70 °C), with a hole, is placed on top of the assembly. With a convex synthetic stamp (T= 50-70 °C) provided with a handle, the sandwich panel is pressed into the hollow mould, by which the upper mould functions as a sort of clamping device. After about 10 seconds the stamp is removed and the shaped article can be taken out of the mould. The recess in the sandwich panel thus formed has a diameter of 125 mm and a height of 25 mm. The thickness along the section of the recess is everywhere almost the same, and almost equal to the starting thickness of the foamed, dried sandwich panel.

### Example 2

A sandwich panel, consisting of consolidated glass fiber reinforced polycarbonate cover layers, and an in-situ formed foam of polyetherimid is produced according to the following method.

Two films of polyetherimid, each having a thickness of 250 micrometer, known as Ultem 1000 standard grade from General Electric company, impregnated with acetone are placed between two cover layers having a thickness of ± 0,50 mm. The cover layer is a consolidated sheet of 2 layers glass fabric (US Style 7781), impregnated with 32 ± 1% polycarbonate, manufactured by the known film stacking method.

This assembly of core films and cover layers is placed between two heated press plates, to which a pressure is applied of about 25-50 kg/cm2. After the assembly has reached the foaming temperature, the press is opened according to a foaming curve related to the selected type of film, until the required foam thickness of 7,2 mm is obtained. After a controlled cooling, the sandwich panel is dried in order to remove acetone as much as possible.

The in-situ sandwich panel manufactured in this way, has an anisotropic foam structure having a compression strength of 2,1 MPa at a density of 90 kg/m3.

In the same way as mentioned in example 1, the above mentioned manufactured sandwich panel of 220x220 mm is heated and then shaped.

The bowl-shaped recess thus formed, in the sandwich panel has a diameter of 135 mm and a height of 30 mm. The thickness along the section of the recess is everywhere almost equal to the starting thickness of the foamed, dried sandwich panel.

## Claims

1. Method of producing a three-dimensional article having a sandwich structure, comprising a deforming step of a mainly flat assembly of a thermoplastic foam and at least one cover layer of a fiber reinforced thermoplastic synthetic material, into a three-dimensional article, **characterized by** the foam of the core layer being anisotropic, and by the starting materials being selected in such a way that the glass transition temperature of the starting material of the core layer is higher than the glass transition temperature of the synthetic material in the cover layer.

2. Method according to claim 1, **characterized in that** the method comprises a sandwich forming step of in-situ forming a sandwich panel, which panel is subjected to the deforming step as the mainly flat panel.

3. Method according to claim 1 or 2, **characterized in that** the starting material of the core layer is selected from the group comprising polyetherimid (PEI), polyethersulfon (PES), polysulfon or a mixture thereof.

4. Method according to one of the preceding claims **characterized in that** the starting material of the cover layer is selected from the group comprising polycarbonate (PC), polymethylmethacrylate (PMMA) or a mixture containing such a compound.

5. Method according to one of the preceding claims, **characterized in that** the thickness of the in-situ formed sandwich panel is smaller than 12 mm.

6. Method according to one of the preceding claims, **characterized in that** the thickness of the in-situ foamed sandwich panel is smaller than 8 mm.

7. Method according to one of the preceding claims, **characterized in that** the deforming step is performed at a mould temperature below 150 °C.

8. Method according to one of the preceding claims, **characterized in that** the foam of the mainly flat assembly comprises at least one intermediate layer of fiber reinforced thermoplastic synthetic material.

## Patentansprüche

1. Verfahren zum Herstellen eines dreidimensionalen Gegenstandes mit Sandwich-Struktur, das einen Schritt umfasst, bei dem eine im Wesentlichen flache Baueinheit aus einem thermoplastischen Schaum und wenigstens eine Abdecklage aus einem faserverstärkten thermoplastischen Kunststoff in einen dreidimensionalen Gegenstand verformt werden,
**dadurch gekennzeichnet, dass** der Schaum der Kernlage anisotrop ist und dass die Ausgangswerkstoffe in der Weise ausgewählt werden, dass die Glasübergangstemperatur des Ausgangswerkstoffs der Kernlage höher ist als die Glasübergangstemperatur des Kunststoffs in der Abdecklage.

2. Verfahren nach Anspruch 1, **dadurch gekennzeichnet, dass** es einen Sandwich-Formungsschritt umfasst, bei dem eine Sandwichplatte vor Ort gebildet wird, wobei die Platte als die im Wesentlichen flache Platte dem Verformungsschritt unterworfen wird.

3. Verfahren nach Anspruch 1 oder 2, **dadurch gekennzeichnet, dass** der Ausgangswerkstoff der Kernlage aus der Gruppe ausgewählt ist, die Polyetherimid (PEI), Polyethersulfon (PES), Polysulfon oder ein Gemisch hiervon umfasst.

4. Verfahren nach einem der vorhergehenden Ansprüche, **dadurch gekennzeichnet, dass** der Ausgangswerkstoff der Abdecklage aus der Gruppe ausgewählt ist, die Polycarbonat (PC), Polymethylmethacrylat (PMMA) oder ein Gemisch, das eine solche Verbindung enthält, umfasst.

5. Verfahren nach einem der vorhergehenden Ansprüche, **dadurch gekennzeichnet, dass** die Dicke der vor Ort gebildeten Sandwichplatte kleiner als 12 mm ist.

6. Verfahren nach einem der vorhergehenden Ansprüche, **dadurch gekennzeichnet, dass** die Dicke der vor Ort gebildeten Sandwichplatte kleiner als 8 mm ist.

7. Verfahren nach einem der vorhergehenden Ansprüche, **dadurch gekennzeichnet, dass** der Verformungsschritt bei einer Formungstemperatur unterhalb von 150 °C ausgeführt wird.

8. Verfahren nach einem der vorhergehenden Ansprüche, **dadurch gekennzeichnet, dass** der Schaum der im Wesentlichen flachen Baueinheit wenigstens eine Zwischenlage aus einem faserverstärkten thermoplastischen Kunststoff umfasst.

## Revendications

1. Procédé de production d'un article tridimensionnel possédant une structure sandwich, comprenant une étape de déformation d'un assemblage essentiellement plat composé d'une mousse thermoplastique et d'au moins une couche de couverture composée d'un matériau synthétique thermoplastique renforcé avec des fibres, en un article tridimensionnel, **caractérisé en ce que** la mousse de la couche centrale est anisotrope, et **en ce que** les matériaux de départ sont choisis de manière à ce que la température de transition vitreuse du matériau de départ de la couche centrale soit supérieure à la température de transition vitreuse du matériau synthétique de la couche de couverture.

2. Procédé selon la revendication 1, **caractérisé en ce que** le procédé comprend une étape de formation d'un sandwich consistant à former in situ un panneau sandwich, ledit panneau étant soumis à l'étape de déformation sous la forme d'un panneau essentiellement plat.

3. Procédé selon la revendication 1 ou 2, **caractérisé en ce que** le matériau de départ de la couche centrale est choisi dans le groupe comprenant le polyétherimide (PEI), la polyéthersulfone (PES), la polysulfone ou un mélange de ceux-ci.

4. Procédé selon l'une quelconque des revendications précédentes, **caractérisé en ce que** le matériau de départ de la couche de couverture est choisi dans le groupe comprenant le polycarbonate (PC), le poly(méthacrylate de méthyle) (PMMA) ou un mélange contenant un tel composé.

5. Procédé selon l'une quelconque des revendications précédentes, **caractérisé en ce que** l'épaisseur du panneau sandwich formé in situ est inférieure à 12 mm.

6. Procédé selon l'une quelconque des revendications précédentes, **caractérisé en ce que** l'épaisseur du panneau sandwich expansé in situ est inférieure à 8 mm.

7. Procédé selon l'une quelconque des revendications précédentes, **caractérisé en ce que** l'étape de déformation est réalisée à une température de moule inférieure à 150°C.

8. Procédé selon l'une quelconque des revendications précédentes, **caractérisé en ce que** la mousse de l'assemblage essentiellement plat comprend au moins une couche intermédiaire composée d'un matériau synthétique thermoplastique renforcé avec des fibres.
